# EUROPEAN PATENT SPECIFICATION

(11) **EP 1 529 929 B1**
(45) Date of publication and mention of the grant of the patent: **22.02.2012**
(21) Application number: 02762772.8
(22) Date of filing: 13.08.2002
(51) Int. Cl.: F01N 3/02, F01N 11/00, F01N 9/00, F02D 41/02

(54) **FILTER CONTROLLER**
FILTERSTEUERUNG
REGULATEUR DE FILTRE

(43) Date of publication of application: 11.05.2005
(73) Proprietor: Bosch Automotive Systems Corporation, Tokyo 150-0002 (JP)
(72) Inventor: Hamahata, Toshihiro, Higashimatsuyame-shi, Saitama 355-8603 (JP); Ito, Satoru, Higashimatsuyame-shi, Saitama 355-8603 (JP)
(74) Representative: Schwabe - Sandmair - Marx
(86) International application number: PCT/JP2002/008253
(87) International publication number: WO 2004/016914

(56) References cited:
- WO-A1-00/68557
- WO-A1-02/053891
- GB-A- 2 239 407
- JP-A- 7 317 529
- JP-A- 7 317 529
- JP-A- 8 061 043
- JP-A- 8 061 043
- JP-A- 2000 170 520

## Description

### TECHNICAL FIELD

The present invention relates to a filter control system capable of suitably timed regeneration of a filter for collecting particulates contained in engine exhaust gas.

### BACKGROUND ART

In recent years, various devices for after-treating diesel particulates in engine exhaust gas have been developed for installation in the exhaust systems of diesel engines so as to curb dispersion of fine particles contained in diesel engine exhaust gas into the atmosphere. The exhaust gas treatment devices of this type are equipped with filter(s) for collecting particulates contained in the exhaust gas emitted by a diesel engine when the exhaust gas passes through an exhaust gas passage. Since the particulates collected by the filter therefore progressively deposit in the filter, the filter eventually clogs to make passage of exhaust gas impossible.

In the conventional exhaust gas treatment device of this type, therefore, when the amount of deposited particulates in the filter is estimated to have reached a prescribed level, the particulates are burned off by, for instance, heating the filter, thereby regenerating the filter and making it again capable of collecting particulates. Since the method used to regenerate the filter is to burn the particulates by heating the filter, the filter comes under a load owing to the heating during filter regeneration. This makes it necessary to minimize the frequency of filter regeneration so as not to shorten the service life of the filter

The conventional devices therefore widely adopt an arrangement for appropriately regenerating the filter in which an estimator is provided for estimating the amount of particulates accumulated in the filter by measuring the exhaust gas pressure differential across the filter, and the time for regenerating the filter is decided based on the estimation output by the estimator.

However, this technique of the prior art has the following problems. When the engine is operating at low rpm because it has entered the idling state, for example, accurate estimation of the amount of deposited particulates based on the pressure differential is difficult because the exhaust gas flow rate in the exhaust passage decreases and the pressure differential across the filter therefore becomes small even when the accumulated amount of particulates is high. When the pressure of the exhaust gas is low, moreover, the relationship between the exhaust gas pressure and the output signal of a pressure sensor does not exhibit a linear characteristic, so that the accuracy of the pressure data contained in the output signal is degraded and, in addition, the output signal from the pressure sensor falls to a level that makes it easily affected by noise. Thus, accurate estimation of the amount of deposited particulates also becomes difficult owing to problems regarding the properties of the pressure sensor.

Further, in a case where particulates have deposited in the filter and the filter remains at a high-temperature with the engine stopped, volatile components in the particulates deposited in the filter are released to produce cracks in the particulate matter. When such cracks occur, the air-flow resistance of the filter decreases because the exhaust gas can more easily pass through the filter by passing through the cracks. As a result, the pressure differential across the filter becomes smaller than before the cracks occurred. When the amount of deposited particulates is estimated from the pressure differential of the exhaust gas under such conditions, the estimation result becomes just like that obtained when the amount of deposited particulates decreases. This makes it difficult to estimate the amount of deposited particulates accurately.

The conventional device that conducts filter regeneration control based on the measured pressure differential of the exhaust gas across the filter is therefore apt to regenerate the filter notwithstanding that the amount of deposited particulates is small and the filter is still capable of collecting a considerable amount of particulates. The end result is that it tends to give rise to the disadvantage of unnecessarily shortening the filter service life by increasing the filter regeneration frequency.

WO 00/68557 A1 relates to a method and a device for controlling an internal combustion engine with an exhaust treatment system. A value which characterizes the state of the exhaust treatment system is determined based on at least one operating parameter of the internal combustion engine.

### SUMMARY OF THE INVENTION

The invention is defined by the subject-matter of the independent claim. The dependent claims are directed to advantageous embodiments.

### ADVANTAGES OF THE INVENTION

Advantageously, it is provided a filter control system that overcomes the foregoing problems of the prior art.

Advantageously, it is provided a filter control system capable of properly estimating the amount of deposited particulates in a filter irrespective of fluctuations in the pressure of the engine exhaust gas.

Adantageously, it is provided a filter control system capable of suitably deciding the time for filter regeneration even when the measured pressure differential across the filter is affected by cracking of particulate matter deposited in the filter.

Advantageously in a filter control system that controls regeneration of a filter for collecting particulates contained in engine exhaust gas based on estimated amount of particulates deposited in the filter, the amount of deposited particulates is estimated based on exhaust gas pressure differential across the filter, the amount of deposited particulates is also estimated based on the engine operating state, one of the two estimations is selected in accordance with the engine operating state, and whether or not to regenerate the filter is decided based on the selected estimation.

In the foregoing configuration, the estimated value of the deposited amount suitable for the engine operating state is selected for use from between the value of the deposited amount estimated from the exhaust gas pressure differential across the filter and the value of the deposited amount estimated based on a deposited amount per unit time calculated from appropriate parameters and the like. Therefore, under low exhaust gas pressure operating circumstances, by not relying on the low-accuracy estimated value based on the exhaust gas pressure differential across the filter but selecting the estimated value of the deposited amount of particulates based on the engine operating state, the time for filter regeneration can be suitably decided based on an estimated value of higher accuracy.

Advantageously, a filter control system that controls regeneration of a filter for collecting particulates contained in engine exhaust gas based on estimated amount of particulates deposited in the filter is equipped with detection means for detecting engine operating state, first estimation means for estimating the amount of particulates deposited in the filter based on exhaust gas pressure differential across the filter, second estimation means for estimating amount of particulates deposited in the filter based on the engine operating state, difference calculating means for calculating the difference between the estimated values of the deposited amount of particulates obtained by the first and second estimation means, and selection means responsive to the difference calculating means and the detection means for selecting one estimation between those of the first and second estimation means, the time for starting regeneration of the filter being decided in accordance with the estimation selected by the selection means.

The detection means can be means for detecting the engine exhaust flow rate. The second estimation means can be configured to conduct calculation for estimating amount of deposited particulates based on at least one among fuel quantity injected into the engine, engine rpm, exhaust gas recirculation rate in the engine and filter pre-entry temperature. The second estimation means can be configured to conduct calculation for estimating the amount of deposited particulates utilizing map calculation using data obtained by measuring increase in amount of deposited particulates per unit time using an actual engine. In this case, the second estimation means can be configured to obtain the estimated value of the amount of deposited particulates in the filter by integrating data obtained by the map calculation.

The estimated value of the amount of deposited particulates being used for filter regeneration control at each time the engine is stopped can be stored in memory and the stored value of the deposited amount of particulates be used as the initial value for the integration.

When one estimation between those of the first and second estimation means is selected, the discrepancy between the estimations can be calculated, the discrepancy be stored in memory as a learned value, and the calculated value in the second estimation means be corrected in accordance with the learned value. In this case, a coefficient dependent on the discrepancy can be calculated and the calculated value in the second estimation means be corrected by the coefficient.

When the difference is equal to or greater than a prescribed value at engine start, adverse effect on the amount of deposited particulates owing to cracking of particulate matter deposited in the filter can be eliminated by selecting the estimation of the second estimation means.

In the present invention, one between an estimated value of the deposited amount of particulates obtained based on the exhaust gas pressure differential across the filter and an estimated value of the deposited amount of particulates calculated from engine operation parameters and the like is selectively used with consideration to the engine operating state and the difference between the two estimated values. As a result, the amount of deposited particulates can be estimated with higher accuracy and the proper time for filter regeneration can be decided more appropriately.

### BRIEF DESCRIPTION OF THE DRAWINGS

Fig. 1 is a schematic diagram showing an exhaust gas treatment system equipped with a filter control system that is an embodiment of the present invention.
Fig. 2 is a block diagram showing the configuration of the control unit of Fig. 1.
Fig. 3 is a block diagram showing the detailed configuration of the estimator of Fig. 2.
Fig. 4 is a flowchart for explaining the configuration of the selector of Fig. 3.

### BEST MODE FOR CARRYING OUT THE INVENTION

In order to clarify the present invention in greater detail, it will now be explained with reference to the attached drawings.

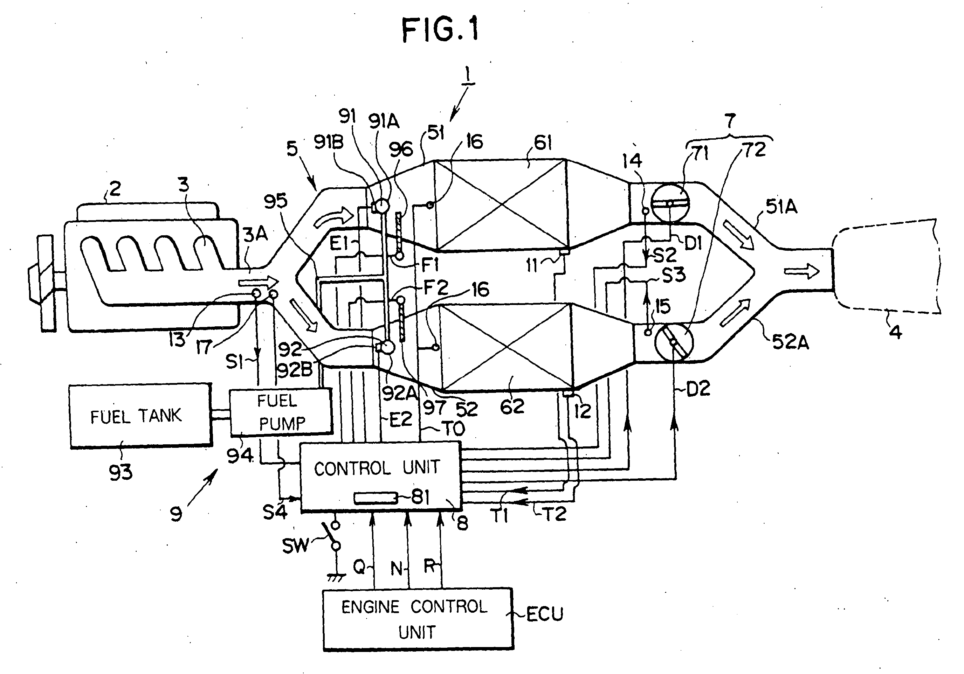

Fig. 1 is a schematic diagram showing an exhaust gas treatment system equipped with a filter control system that is an embodiment of the present invention. The exhaust gas treatmemt system 1 is a system for after-treating particulates contained in the exhaust gas of a diesel engine 2 and is installed between the outlet end 3A of an exhaust manifold 3 and an exhaust pipe 4 of the diesel engine 2. The exhaust gas treatment system 1 has an exhaust gas passage 5 including a pair of parallel passage portions constituting mutually bypassing passages that bifurcate on the inlet side at the outlet end 3A of the exhaust manifold 3 and merge into one on the exhaust pipe 4 side. The first branch passage 51 and the second branch passage 52 constituting this parallel passage portion are respectively equipped with a first filter 61 and a second filter 62 for collecting particulates in the exhaust gas.

The first filter 61 and second filter 62 are both of a well-known configuration used for such a purpose. All of the exhaust gas sent into the first branch passage 51 is passed through the first filter 61 and sent to the exhaust pipe 4 side. The first filter 61 is structured to effectively collect particulates contained in the exhaust gas at this time. On the other hand, all of the exhaust gas sent into the second branch passage 52 is passed through the second filter 62 and sent to the exhaust pipe 4 side. The second filter 62 is structured to effectively collect particulates contained in the exhaust gas at this time.

An exhaust passage switching valve device 7 is provided on the outlet side of the exhaust gas passage 5 selectively passing exhaust gas through one or the other of the first branch passage 51 and the second branch passage 52 in order to collect particulates contained the exhaust gas by one or the other of pair of filters, i.e., the first filter 61 and the second filter 62. The exhaust passage switching valve device 7 comprises a first flow rate regulating valve 71 installed in an outlet portion 51A of the first branch passage 51 and capable of freely regulating the flow rate of exhaust gas passing through the outlet portion 51A and a second flow rate regulating valve 72 installed in an outlet portion 52A of the second branch passage 52 and capable of freely regulating the flow rate of exhaust gas passing through the outlet portion 52A.

Driving of each of the first flow rate regulating valve 71 and second flow rate regulating valve 72 is, in the manner explained in detail later, controlled by drive signals D1, D2 from a control unit 8 so that when one is full open the other is nearly full closed. By this, operation for collecting particulates contained in the exhaust gas of the diesel engine 2 can be constantly conducted at one or the other of the first and second filters 61, 62. Thus the structure is such that when one of the filters is conducting particulate collecting operation, substantially no exhaust gas passes through the other filter, which is therefore in a state enabling regeneration the other filter.

A fuel burner unit, designated as a whole by reference numeral 9, is installed on the inlet side of the exhaust gas passage 5 so as to enable filter regeneration to be conducted by heat-induced burning for removing particulates deposited in the first and second filters 61, 62 by their respective particulate collecting operations.

The fuel burner 9 includes a pair of burner devices composed of a first burner 91 located near the inlet of the filter 61 in the first branch passage 51 and a second burner 92 located near the inlet of the filter 62 in the second branch passage 52. The arrangement is such that pressurized fuel obtained by using a fuel pump 94 to pressurize fuel for the diesel engine 2 present in a fuel tank 93 is supplied to the first and second burners 91, 92 through a fuel supply line 95. It should be noted that a configuration can of course be adopted wherein the fuel supplied to the first and second burners 91, 92 is supplied through the fuel supply line 95 not from the fuel tank 93 but from another separately provided fuel supply source.

A nozzle hole 91A of the first burner 91 is directed toward the first filter 61 and an ignition plug 96 for igniting fuel jetted from the nozzle hole 91A is located near the nozzle hole 91A. In the second burner 92, an ignition plug 97 is similarly located near a nozzle hole 92A. A configuration is adopted that controls the ON/OFF operation of the ignition plugs 96, 97 by ignition control signals F1, F2 from the control unit 8.

At the first burner 91 is provided a solenoid valve 91B that is controlled to open and close by a drive signal E1 from the control unit 8. When the solenoid valve 91B is put in the open state at a prescribed time point by a command from the control unit 8, fuel is jetted from the nozzle hole 91A toward the first filter 61. Synchronously with this jetting the ignition plug 96 operates to produce an ignition spark, whereby the fuel jetted from the nozzle hole 91A ignites and the resulting flame is thrown into the first filter 61 to enable heat-induced burning of the particulates deposited in the first filter 61.

Similarly, at the second burner 92 is provided a solenoid valve 92B that is controlled to open and close by a drive signal E2 from the control unit 8. When the solenoid valve 92B is put in the open state at a prescribed time point by a command from the control unit 8, fuel is jetted from the nozzle hole 92A toward the second filter 62. Synchronously with this jetting the ignition plug 97 operates to produce an ignition spark, whereby the fuel jetted from the nozzle hole 92A ignites and the resulting flame is thrown into the second filter 62 to enable heat-induced burning of the particulates deposited in the second filter 62.

Temperature sensors 11, 12 are provided respectively on the peripheral surfaces 61A, 62A of the first and second filters 61, 62 so that it can be determined whether the heating and burning of the particulates in the first and second filters 61, 62 has been completed by the flames thrown from the first and second burners 91, 92 as explained in the foregoing, that is, whether or not the regeneration of the filter has been completed. Temperature signals T1, T2 indicating the temperatures of the peripheral surfaces 61A, 62A are sent from the temperature sensors 11, 12 to the control unit 8. The control unit 8 is formed by the use of a microcomputer 81.

Reference numerals 13 - 15 designate pressure sensors. A pressure signal S1 indicating the exhaust gas pressure P1 detected by the pressure sensor 13 on the inlet side of the exhaust gas passage 5, a pressure signal S2 indicating the exhaust gas pressure P2 detected by the pressure sensor 14 on the outlet side of the first branch passage 51, and a pressure signal S3 indicating the exhaust gas pressure P3 detected by the pressure sensor 15 on the outlet side of the second branch passage 52 are input to the control unit 8 from the corresponding pressure sensors. In the control unit 8, the amount of deposited particulates in the first and second filters 61, 62 is estimated from these pressure signals as explained later.

The control unit 8 receives additional temperature signals T0 indicating filter pre-entry temperatures from temperature sensors 16 installed on the inlet side of the first and second filters 61, 62 and receives a flow rate signal S4 indicating exhaust gas flow rate from a flow rate sensor 17 for detecting exhaust gas flow rate. The control unit 8 further receives from an engine control unit ECU a fuel injection quantity signal Q indicating the operating state of the diesel engine 2, an engine rpm signal N, and a recirculation rate signal R indicating the rate of exhaust gas recirculation (EGR). The control unit 8 is connected to a DPF switch SW for turning the exhaust gas treatment system 1 ON and OFF. Operation of the exhaust gas treatment system 1 commences when the operator turns the DPF switch SW ON.

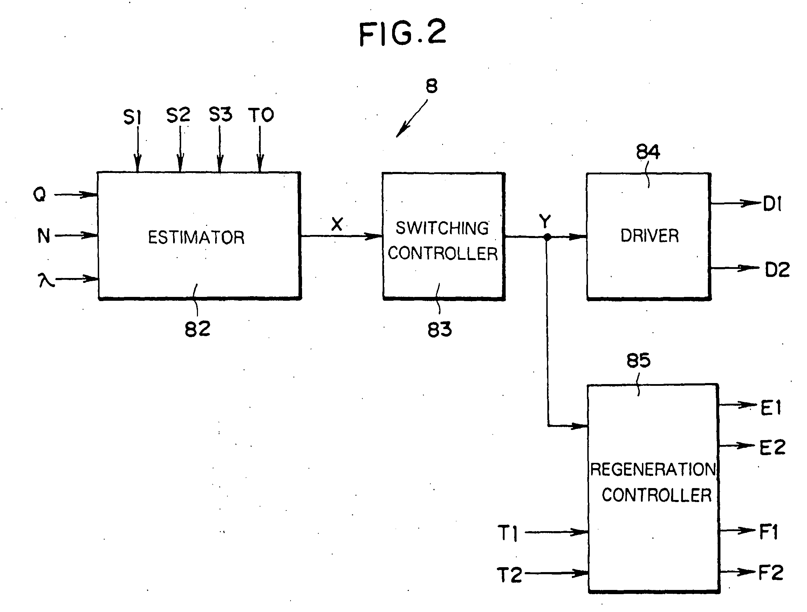

Fig. 2 is a block diagram showing the configuration of the control unit 8. The control unit 8 is equipped with an estimator 82 for calculating and estimating the amount of deposited particulates in the filter that is collecting particulates contained in the exhaust gas. Calculation for estimating the amount of deposited particulates in the filter is performed here as explained in detail later. The estimated amount data X is input to a switching controller 83.

In response to estimated amount data X, a switching command signal Y for instructing switching of the exhaust gas flow passage in the exhaust gas passage 5 is output from the switching controller 83 when the amount of deposited particulates in the filter indicated by the estimated amount data X exceeds a prescribed level. A driver 84 outputs drive signals D1, D2 in response to the switching command signal Y, whereby the open-closed states of the first flow rate regulating valve 71 and second flow rate regulating valve 72 of the exhaust passage switching valve device 7 can be reversed. As a result, the exhaust gas flow passage can be switched from one branch passage to the other branch passage to perform filter switching.

In order to effect regeneration of the filter whose amount of deposited particulates was determined to have exceeded the prescribed level in the estimator 82A, in response to the switching command signal Y a regeneration controller 85 controles the operation of the fuel burner unit 9 to heat the filter to be regenerated. It outputs drive signals E1, E2 and ignition control signals F1, F2 in accordance with the contents of the switching command signal Y.

For example, when the second filter 62 is regenerated, the solenoid valve 91B is controlled to close by the drive signal E1 and the solenoid valve 92B is controlled to assume the open state by the drive signal E2. Further, the ignition plug 97 is driven by the ignition control signal F2 to ignite the fuel jetted from the nozzle hole 92A and send the resulting flame into the second filter 62. Although the second flow rate regulating valve 72 is kept nearly closed by the driver 84 at this time, its driving is controlled so that air flows slightly, whereby the burning of particulates in the second filter 62 is effectively performed. The temperature of the second filter 62 is monitored using the temperature signal T2 and, based on the temperature signal T2, the solenoid valve 92B is closed to conclude the regeneration of the second filter 62 when the temperature of the second filter 62 has remained equal to or higher than a prescribed value for a prescribed time.

While the regeneration of the second filter 62 was explained, when regenerating the first filter 61, the solenoid valve 91B is opened, the solenoid valve 92B is closed and the ignition plug 96 operated, whereby the regeneration operation for the first filter 61 can be conducted.

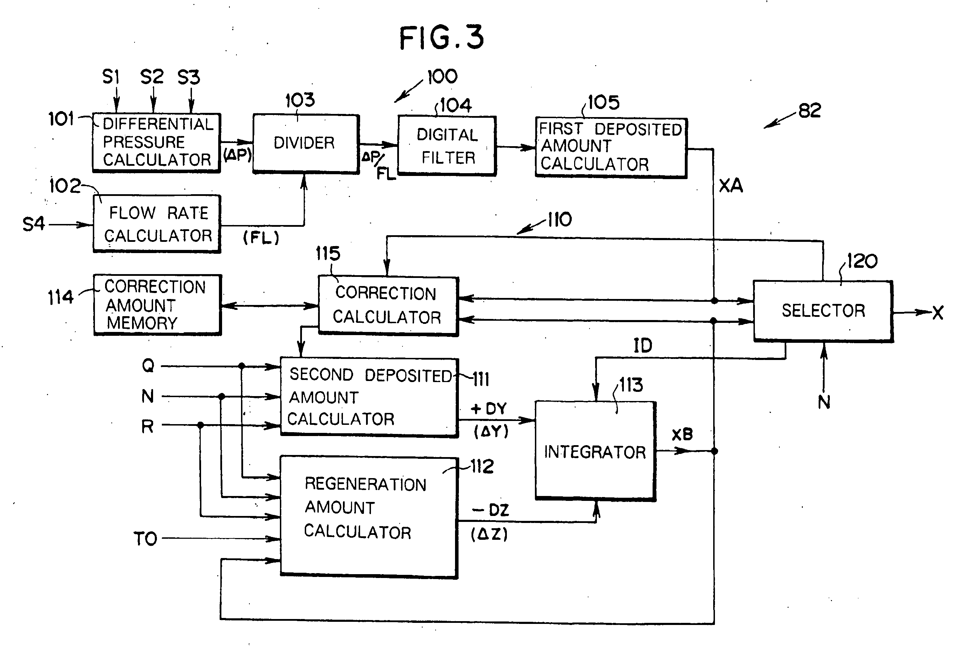

The estimator 82 that performs the calculation for estimating the amount of deposited particulates accumulated in the first and second filters 61, 62 will now be explained in detail with reference to Fig. 3.

The estimator 82 is configured to include a first estimation calculating section 100 for estimating the amount of deposited particulates in the filters from the pressure differentials across filters and a second estimation calculating section 110 for estimating the amount of deposited particulates in the filters based on the operating conditions of the diesel engine 2, and to use a selector 120 to select and output the calculation result of one or the other of the first estimation calculating section 100 and the second estimation calculating section 110 as the estimated amount data X.

The first estimation calculating section 100 is equipped with a differential pressure calculator 101 responsive to the pressure signals S1 - S3 for calculating the differential pressure ΔP of the exhaust gas pressure across the in-service filter that is collecting particulates (differential pressure across filter) and a flow rate calculator 102 for calculating the flow rate FL of the exhaust gas passing through the in-service filter based on the flow rate signal S4 from the exhaust gas flow rate sensor 17. The output of the differential pressure calculator 101 and the output of the flow rate calculator 102 are input to a divider 103 and a calculation for obtaining the value of ΔP/FL is conducted in the divider 103.

The result of the calculation in the divider 103 is input to a first deposited amount calculator 105 through a digital filter 104. The first deposited amount calculator 105 calculates an estimated value of the amount of deposited particulates at each instant based on the value of ΔP/FL. The result of the estimation calculation obtained in the first deposited amount calculator 105 is output as first estimation data XA.

While an example of the configuration of the first estimation calculating section 100 was explained in the foregoing, technologies for estimation by calculating the amount of particulates deposited in a filter based on the pressure differential across the filter are themselves known to the art and, therefore, the configuration of the first estimation calculating section 100 shown in Fig. 3 can be replaced with another prior art configuration.

The second estimation calculating section 110 will now be explained. The second estimation calculating section 110 is configured as a means for performing a calculation for estimating the amount of deposited particulates in the in-service filter based on engine operating conditions. The second estimation calculating section 110 is equipped with a second deposited amount calculator 111 for calculating an estimated value of the amount of particulates deposited in the in-service filter per unit time at each instant based on operating condition data. In this embodiment, the second deposited amount calculator 111 is configured to calculate an estimated value of amount of deposited particulates per unit time at each instant ΔY based on the fuel injection quantity signal Q, engine rpm signal N and recirculation rate signal R.

As the temperature of the in-service filter increases with rising exhaust gas temperature, the particulates deposited therein start to burn to cause a reduction in deposited particulates (filter regeneration). Designated by reference numeral 112 is a regeneration amount calculator for using the engine operating state to calculate the amount of reduction in deposited particulates by burning as the estimated amount of regeneration. The regeneration amount calculator 112 is configured to be responsive to the fuel injection quantity signal Q, engine rpm signal N, recirculation rate signal R, temperature signal T0 and second estimation data XB obtained as explained later for calculating the amount of deposited particulates in the in-service filter burned per unit time as the estimated value of regeneration amount ΔZ.

The estimated value of amount of deposited particulates per unit time ΔY from the second deposited amount calculator 111 and the estimated value of regeneration amount per unit time ΔZ from the regeneration amount calculator 112 are sent to an integrator 113 as deposit data DY and regeneration data DZ, respectively. Initial value data ID indicating the initial integration value are input to the integrator 113 from the selector 120. As this initial value data ID is used the value of the estimated amount data X stored in the selector 120 at the time of most recent engine stopping, as explained later. In the integrator 113, the deposit data DY and the regeneration data DZ are time-integrated in the shown polarities using the initial value data ID. The integration result obtained in the integrator 113 is the estimation result of the second estimation calculating section 110. That is to say, the second estimation data XB calculated from the engine operating state to indicate the estimated value of the amount of deposited particulates in the in-service filter is output from the integrator 113 as the estimated amount data X.

As mentioned earlier, the second estimation data XB is also input to the regeneration amount calculator 112. The regeneration amount calculator 112 is configured to calculate the regeneration amount per unit time ΔZ based on the fuel injection quantity signal Q, engine rpm signal N, recirculation rate signal R, temperature signal T0 and second estimation data XB. The reason for taking the second estimation data XB into account in the calculation of the estimation in the regeneration amount calculator 112 is to perform a higher accuracy amount of regeneration estimation by giving consideration to the fact that, even under the same exhaust gas temperature and other conditions, the amount of regeneration is affected by the amount of deposited particulates at the time concerned.

The calculations in the first deposited amount calculator 105, second deposited amount calculator 111 and regeneration amount calculator 112 can be done by map calculation. In this case, the deposited amount or the regeneration amount can be appropriately determined by using the respective maps which are obtained based on the measurement results by using an actual engine equipped with filters, setting the testbench to predefined input conditions.

The selector 120 is configured to select one or the other of the first estimation data XA and the second estimation data XB with consideration to the operating state of the diesel engine 2 and the difference between the first estimation data XA and the second estimation data XB, and to output the selected estimation data as the estimated value data X indicating the estimated value of the current amount of particulates deposited in the in-service filter. In this embodiment, the engine rpm signal N is input to the selector 120 as a signal indicating the engine operating state.

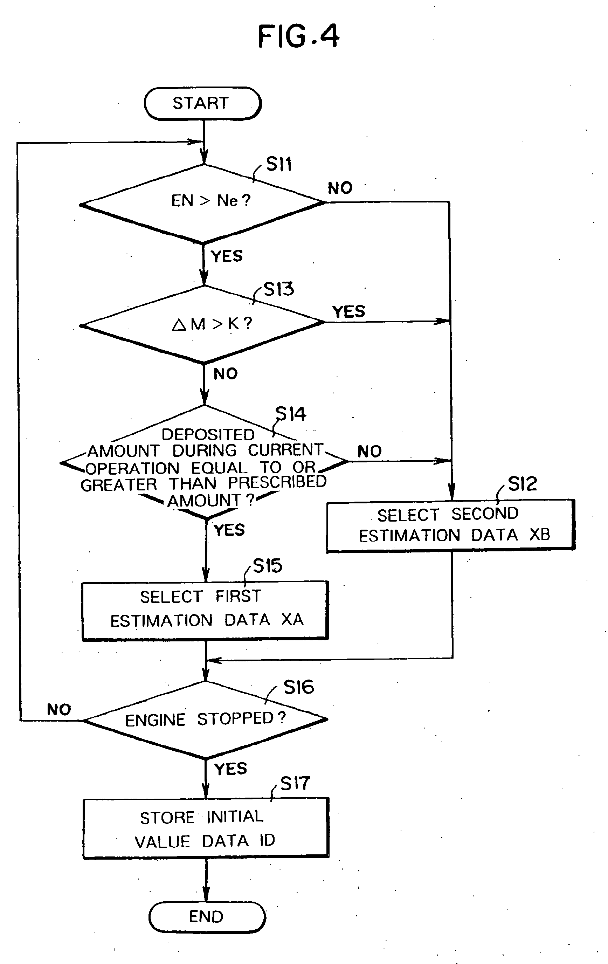

Fig. 4 is a flowchart for explaining the configuration and operation of the selector 120. To explain the selector 120 with reference to Fig. 4, first, in step S11, it is discriminated based on the engine rpm signal N whether or not the engine rpm EN is greater than a prescribed value Ne. The prescribed value Ne indicates a lower limit value of the engine rpm enabling proper estimation of the current amount of deposited particulates from the pressure differential across the filter. The prescribed value Ne can, for example, be the idling rpm.

When the engine rpm is not greater than a prescribed value Ne, the discrimination result in step S11 is NO and the process flow continues to step S12, in which the second estimation data XB is selected as the estimated value X. On the other hand, when the engine rpm is greater than the prescribed value Ne, the discrimination result in step S11 is YES and the process flow continues to step S13.

In step S13, the first estimation data XA and the second estimation data XB are compared and it is discriminated whether or not the absolute value of the difference Δ M between them is greater than a prescribed value K. When ΔM > K, since it can be considered that the difference ΔM has become large owing to occurrence of cracking in the particulate matter deposited in the filter, the reliability of the value of the first estimation data XA is judged low. Therefore, when the discrimination result in step S13 is YES, the process flow continues to step S12, the second estimation data XB is selected and the second estimation data XB is output as the estimated value data X. On the other hand, when ΔM ≤ K, the discrimination result in step S13 is NO and the process flow continues to step S14.

In step S14, it is further discriminated whether or not the amount of deposited particulates from the latest starting of the diesel engine 2 has reached a prescribed amount sufficient to repair cracking. This discrimination is effected as a discrimination of whether or not the deposited amount during the current operation is equal to or greater than a prescribed amount made by comparing the value of second estimation data XB at the time of the most recent engine stopping and the value of the current second estimation data XB.

When the discrimination result in step S13 is NO, i.e., when the deposited amount during the current operation is not equal to or greater than the prescribed amount, the discrimination result in step S14 is NO and the process flow continues to step S12, in which the second estimation data XB is selected. On the other hand, when the deposited amount during the current operation is equal to or greater than the prescribed amount, the discrimination result in step S14 is YES and the process flow continues to step S15, in which the first estimation data XA is selected.

Thus when the engine rpm EN is lower than the prescribed value Ne, the second estimation data XB is selected as being more reliable than the first estimation data XA.

When the difference ΔM between the first estimation data XA and the second estimation data XB is greater than K, since the chief cause can be considered to be cracking in the particulate matter deposited in the filter, in this case, too, the second estimation data XB is selected as being the more reliable.

Further, even when Δ M ≤ K in step S13, the process flow goes to S12 and the second estimation data XB is selected as a precaution so long as the deposited amount during the current operation is not equal to or greater than the prescribed amount.

Only when the discrimination result in step S14 becomes YES owing to increasing amount of deposited particulates with passage of time from engine starting, is the first estimation data XA selected.

After one or the other of the first estimation data XA and the second estimation data XB has been selected, the process flow continues to step S16, in which it is discriminated whether or not the engine is stopped. If the diesel engine 2 has not yet stopped, the discrimination result in step S16 is NO, and the process flow returns to step S11 to repeat execution of the foregoing operations.

When operation of the diesel engine 2 is stopped such as by turning off the ignition key switch, the discrimination result in step S16 becomes YES, the value of the estimated data X at this time is stored and saved in an unshown memory as initial value data ID in step S17, and the operation is terminated.

Although this embodiment is configured to select one or the other of the first estimation data XA and the second estimation data XB using not only the discrimination result of step S11 but also the discrimination result of step S13, which discriminates whether or not the difference ΔM is greater than the prescribed value K, a configuration can be adopted in which the discrimination of step S13 is omitted and one or the other of the first estimation data XA and the second estimation data XB is selected in accordance with only the discrimination result of step S11.

Now, the calculation for the estimation in the second estimation calculating section 110 involves integration, so that error accumulating over a long period can be expected to make the calculation result become inaccurate. In the embodiment shown in Fig. 3, therefore, the second estimation calculating section 110 is provided with a correction amount memory 114 and a correction calculator 115 and is configured so that the amount of deposited particulates per unit time calculated in the second deposited amount calculator 111 is appropriately corrected by a learning operation.

Specifically, the correction calculator 115 is input with the first estimation data XA and the second estimation data XB. In the case where the selector 120 has selected the second estimation data XB, if the rotational speed of the diesel engine 2 increases and an operation is conducted for switching the selector 120 to select the first estimation data XA instead of the second estimation data XB, the difference between the first estimation data XA and the second estimation data XB at that time is calculated as follows in response to the switching operation.

When no regeneration treatment has been conducted and the integrated value of the regeneration treatment is zero, then, insofar as the difference is within a prescribed range, the ratio DXA/DXB between an estimated value DXA by the first estimation data XA and an estimated value DXB by the second estimation data XB is calculated as a discrepancy coefficient C and the discrepancy coefficient C is stored in the correction amount memory 114.

On the other hand, when regeneration treatment has been conducted and the integrated value of the regeneration treatment is not zero, the first estimation data XA is subtracted from the second estimation data XB, the result of the subtraction is divided by the integrated value of the regeneration treatment, the result is defined as the discrepancy coefficient C, and the discrepancy coefficient C is stored in the correction amount memory 114.

In either case, when the difference exceeds the prescribed range, the filter is judged to have deteriorated and the discrepancy coefficient C is not calculated. A configuration is preferably adopted that, when filter deterioration has been judged in this way, advises the operator to change the filter by indicating a warning by means of, for instance, lighting or flashing a prescribed lamp.

The discrepancy coefficient C is stored in the correction amount memory 114 as a learned value, the discrepancy coefficient C is sent to the second deposited amount calculator 111, and the amount of deposited particulates per unit time calculated here is corrected by multiplying it by the discrepancy coefficient C. The corrected amount of deposited particulates per unit time is thereafter output as the amount of deposited particulates per unit time Δ Y

Thus the discrepancy coefficient C is calculated in the correction calculator 115 using the values of the first estimation data XA and second estimation data XB, the discrepancy coefficient C is stored and accumulated in the correction amount memory 114, and correction is appropriately performed in the processing for calculating the amount of deposited particulates per unit time, whereby error is corrected without being accumulated during the integration calculation in the integrator 113. As a consequence, the calculation result is accurate, the second estimation data XB, which is estimated data based on the amount of deposited particulates per unit time, becomes a reliable value, and, therefore, the estimation of the amount of deposited particulates becomes accurate.

Since the exhaust gas treatment system 1 is configured in the foregoing manner, the estimation value of higher reliability in view of the current state is selected from between two estimation values, the estimated value of the deposited amount of particulates calculated based on the pressure differential across the filter and the estimated value of the deposited amount of particulates simulated based on the operating state of the diesel engine 2, and whether or not to regenerate the filter is decided in accordance with the selected estimation value. Filter regeneration can therefore be conducted at the most optimum time. As a result, the service life of the filter can be extended relative to heretofore and a reduction in running cost can be expected.

As set out in the foregoing, in accordance with the present invention, the estimation value of higher reliability in view of the current engine operating state is selected from between two estimation values, the estimated value of the deposited amount of particulates calculated based on the pressure differential across the filter and the estimated value of the deposited amount of particulates simulated based on amount of deposited particulates per unit time, and whether or not to regenerate the filter is decided in accordance with the selected estimation value. Filter regeneration can therefore be conducted at the most optimum time. As a result, filter regeneration frequency can be optimized to extend the service life of the filter relative to heretofore so that a reduction in running cost can be expected.

### INDUSTRIAL APPLICABILITY

As set out in the foregoing, the filter control system according to the present invention is useful for accurately estimating the amount of particulates deposited in a filter and conducting filter regeneration at suitable times.

## Claims

1. A filter control system (1) that controls regeneration of a filter (61, 62) for collecting particulates contained in engine exhaust gas based on estimated amount of particulates deposited in the filter (61, 62), the filter control system (1) comprising:
detection means (13 to 17) for detecting engine operating state; first estimation means (100) for estimating amount of particulates deposited in the filter based on exhaust gas pressure differential across the filter;
second estimation means (110) for estimating amount of particulates deposited in the filter based on engine operating state;
difference calculating means (115) for calculating the difference between the estimated values (XA, XB) of the deposited amount of particulates obtained by the first and second estimation means (100, 110); and
selection means (120) responsive to the difference calculating means (115) and the detection means (13 to 17) for selecting one estimation between those of the first and second estimation means (100, 110),
the time for starting regeneration of the filter (61, 62) being decided in accordance with the estimation selected by the selection means (120);
**characterized in that**:
when one estimation between those of the first and second estimation means (100, 110) is selected, the discrepancy between the estimations (XA, XB) is calculated, the discrepancy is stored in memory (114) as a learned value, and the calculated value (XB) in the second estimation means (110) is corrected in accordance with the learned value.

2. The filter control system (1) as claimed in claim 1, wherein the detection means is means (17) for detecting engine exhaust flow rate.

3. The filter control system (1) as claimed in claim 1, wherein the second estimation means (110) conducts calculation for estimating the amount of deposited particulates based on at least one among fuel quantity injected into the engine (2), engine rpm, exhaust gas recirculation rate in the engine (2) and filter pre-entry temperature.

4. The filter control system (1) as claimed in claim 1, wherein the second estimation means (110) conducts calculation for estimating the amount of deposited particulates utilizing map calculation using measured data obtained by measuring increase in amount of deposited particulates per unit time using an actual engine (2).

5. The filter control system (1) as claimed in claim 4, wherein the second estimation means (110) is configured to obtain the estimated value (XB) of the amount of deposited particulates in the filter (61, 62) by integrating data obtained by the map calculation.

6. The filter control system (1) as claimed in claim 5, wherein the estimated value (XB) of the amount of deposited particulates being used for filter regeneration control at each time the engine (2) is stopped is stored in memory (114) and the stored value of the deposited amount of particulates is used as the initial value for the integration in the second estimation means (110).

7. The filter control system (1) as claimed in claim 1, wherein a coefficient dependent on the discrepancy is calculated and the calculated value (XB) in the second estimation means (110) is corrected by the coefficient.

8. The filter control system (1) as claimed in claim 1, wherein when one of the values exceeds a prescribed value, such fact is displayed to the operator.

9. The filter control system (1) as claimed in claim 1, wherein when the difference is equal to or greater than a prescribed value at engine start, the estimation of the second estimation means (110) is selected irrespective of the detection result of the detection means (13 to 17).

10. The filter control system (1) as claimed in claim 1, wherein when the difference is equal to or greater than a prescribed value at engine start, the estimation of the second estimation means (110) is selected during a prescribed period irrespective of the detection result of the detection means (13 to 17).

11. The filter control system (1) as claimed in claim 10, wherein the prescribed period is a period that the estimated value of the amount of deposited particulates started by the second estimation means (110) from engine start takes to reach a prescribed value.

12. The filter control system (1) as claimed in claim 10, wherein when the difference becomes smaller than a prescribed value, the estimation by the first estimation means (100) is selected instead of the estimation by the second estimation means (110).

## Patentansprüche

1. Ein Filtersteuersystem (1), das die Regeneration eines Filters (61, 62) steuert, der Partikel sammelt, die im Motorabgas beinhaltet sind, und zwar basierend auf einer geschätzten Menge der Partikel, die in dem Filter (61, 62) abgeschieden bzw. abgelagert sind, wobei das Filtersteuersystem (1) aufweist:
Detektionsmittel (13 bis 17) zum Detektieren eines Motorbetriebszustandes;
erste Schätzmittel (100) zum Schätzen einer Menge von Partikeln, die in dem Filter abgeschieden bzw. abgelagert sind, und zwar basierend auf einem Abgasdruckunterschied über dem Filter;
zweite Schätzmittel (110) zum Schätzen einer Menge von Partikeln, die in dem Filter abgeschieden bzw. abgelagert sind, und zwar basierend auf dem Motorbetriebszustand;
Differenzberechnungsmittel (115) zum Berechnen der Differenz zwischen den geschätzten Werten (XA, XB) der abgeschiedenen bzw. abgelagerten Menge von Partikeln, die durch das erste und zweite Schätzmittel (100, 110) erhalten wurden; und
Auswahlmittel (120), die auf das Differenzberechnungsmittel (115) und das Detektionsmittel (13 bis 17) reagieren, um eine Schätzung zwischen solchen der ersten und zweiten Schätzmittel (100, 110) zu wählen bzw. auszuwählen,
die Zeit zum Beginn der Regeneration des Filters (61, 62) wird in Übereinstimmung mit der Schätzung, die durch das Auswahlmittel (120) gewählt bzw. ausgewählt wurde, bestimmt;
**dadurch gekennzeichnet, dass**:
wenn eine Schätzung zwischen solchen der ersten und zweiten Schätzmittel (100, 110) gewählt bzw. ausgewählt ist, wird die Diskrepanz bzw. Abweichung zwischen den Schätzungen (XA, XB) berechnet, die Diskrepanz bzw. Abweichung wird in dem Speicher (114) als ein gelernter Wert gespeichert, und der berechnete Wert (XB) wird in dem zweiten Schätzmittel (110) in Übereinstimmung mit dem gelernten Wert korrigiert.

2. Filtersteuersystem (1) nach Anspruch 1, wobei das Detektionsmittel ein Mittel (17) zum Detektieren einer Motorabgasflussrate ist.

3. Filtersteuersystem (1) nach Anspruch 1, wobei das zweite Schätzmittel (110) eine Berechnung zur Schätzung der Menge von abgeschiedenen bzw. abgelagerten Partikeln durchführt, und zwar basierend auf zumindest einem unter bzw. von einer Treibstoffquantität, die in den Motor (2) injiziert wurde, Motordrehzahl, Abgasrückführungsrate in den Motor (2) und einer Filtervoreingangstemperatur.

4. Filtersteuersystem (1) nach Anspruch 1, wobei das zweite Schätzmittel (110) eine Berechnung zur Schätzung der Menge von abgeschiedenen bzw. abgelagerten Partikeln durchführt, und zwar unter Verwendung einer Abbildungsberechnung, die gemessene Daten verwendet, die durch einen Messanstieg in der Menge von abgeschiedenen bzw. abgelagerten Partikeln pro Zeiteinheit unter Verwendung eines tatsächlichen Motors (2) erhalten wurden.

5. Filtersteuersystem (1) nach Anspruch 4, wobei das zweite Schätzmittel (110) konfiguriert ist, um den geschätzten Wert (XB) der Menge von abgeschiedenen bzw. abgelagerten Partikeln in dem Filter (61, 62) durch Integration von Daten, die durch die Abbildungsberechnung erhalten wurden, zu erhalten.

6. Filtersteuersystem (1) nach Anspruch 5, wobei der Schätzwert (XB) der Menge von abgeschiedenen bzw. abgelagerten Partikeln, der zur Filterregenrationssteuerung verwendet wird, und zwar jedes Mal wenn der Motor gestoppt ist, in dem Speicher (114) gespeichert wird, und der gespeicherte Wert der abgeschiedenen bzw. abgelagerten Menge der Partikel als der Initialwert für die Integration in dem zweiten Schätzmittel (110) verwendet wird.

7. Filtersteuersystem (1) nach Anspruch 1, wobei ein Koeffizient, der abhängig von der Diskrepanz bzw. Abweichung ist, berechnet wird, und der berechnete Wert (XB) in dem zweiten Schätzmittel (110) durch den Koeffizient korrigiert wird.

8. Filtersteuersystem (1) nach Anspruch 1, wobei wenn einer der Werte einen vorgeschriebenen bzw. vorgegeben Wert überschreitet, diese Tatsache dem Bediener angezeigt wird.

9. Filtersteuersystem (1) nach Anspruch 1, wobei wenn die Differenz gleich oder größer als ein vorgeschriebener bzw. vorgegebener Wert beim Motorstart ist, wird die Schätzung des zweiten Schätzmittels (110) gewählt, und zwar ungeachtet von dem Detektionsergebnis des Detektionsmittels (13 bis 17).

10. Filtersteuersystem (1) nach Anspruch 1, wobei wenn die Differenz gleich oder größer als ein vorgeschriebener bzw. vorgegebener Wert beim Motorstart ist, wird die Schätzung des zweiten Schätzmittels (110) während einer vorgeschriebenen Periode gewählt, und zwar ungeachtet von dem Detektionsergebnis des Detektionsmittels (13 bis 17).

11. Filtersteuersystem (1) nach Anspruch 10, wobei die vorgeschriebene bzw. vorgegebene Periode eine Periode ist, die der geschätzte Wert der Menge von abgeschiedenen bzw. abgelagerten Partikeln, der durch das zweite Schätzmittel (110) ab dem Motorstart gestartet wurde, benötigt, um einen vorgeschriebenen bzw. vorgegebenen Wert zu erreichen.

12. Filtersteuersystem (1) nach Anspruch 10, wobei wenn die Differenz kleiner als ein vorgeschriebener bzw. vorgegebener Wert ist, wird die Schätzung durch das erste Schätzmittel (100) gewählt, und zwar an Stelle der Schätzung durch das zweite Schätzmittel (110).

## Revendications

1. Système de régulation de filtre (1) qui régule la régénération d'un filtre (61, 62) pour collecter des particules contenues dans le gaz d'échappement d'un moteur sur la base de la quantité estimée de particules déposées dans le filtre (61, 62), le système de régulation de filtre (1) comprenant :
des moyens de détection (13 à 17) pour détecter l'état de fonctionnement du moteur ;
des premiers moyens d'estimation (100) pour estimer la quantité de particules déposées dans le filtre sur la base de la différence de pression des gaz d'échappement à travers le filtre ;
des seconds moyens d'estimation (110) pour estimer la quantité de particules déposées dans le filtre sur la base de l'état de fonctionnement du moteur ;
des moyens de calcul de différence (115) pour calculer la différence entre les valeurs estimées (XA, XB) de la quantité de particules déposées obtenue par les premiers et seconds moyens d'estimation (100, 110) ; et
des moyens de sélection (120) influencés par les moyens de calcul de différence (115) et les moyens de détection (13 à 17) pour choisir une estimation entre celles des premiers et seconds moyens d'estimation (100, 110),
le moment de démarrage de la régénération du filtre (61, 62) étant décidé en fonction de l'estimation choisie par les moyens de sélection (120) ;
**caractérisé en ce que** :
lorsqu'une estimation entre celles des premiers et seconds moyens d'estimations (100, 110) est choisie, la divergence entre les estimations (XA, XB) est calculée, la divergence est stockée dans la mémoire (114) en tant que valeur acquise, et la valeur calculée (XB) dans les seconds moyens d'estimation (110) est corrigée en fonction de la valeur acquise.

2. Système de régulation de filtre (1) selon la revendication 1, dans lequel les moyens de détection sont des moyens (17) pour détecter le débit d'échappement des gaz du moteur.

3. Système de régulation de filtre (1) selon la revendication 1, dans lequel les seconds moyens d'estimation (110) effectuent un calcul pour estimer la quantité de particules déposées sur la base d'au moins une parmi la quantité de carburant injectée dans le moteur (2), le régime du moteur, le taux de recirculation des gaz d'échappement dans le moteur (2) et la température de pré-admission du filtre.

4. Système de régulation de filtre (1) selon la revendication 1, dans lequel les seconds moyens d'estimation (110) effectuent un calcul pour estimer la quantité de particules déposées en utilisant le calcul cartographique au moyen des données mesurées obtenues en mesurant l'augmentation de la quantité de particules déposées par unité de temps au moyen d'un moteur réel (2).

5. Système de régulation de filtre (1) selon la revendication 4, dans lequel les seconds moyens d'estimation (110) sont configurés pour obtenir la valeur estimée (XB) de la quantité de particules déposées dans le filtre (61, 62) en intégrant les données obtenues au moyen du calcul cartographique.

6. Système de régulation de filtre (1) selon la revendication 5, dans lequel la valeur estimée (XB) de la quantité de particules déposées utilisée pour la régulation de régénération du filtre chaque fois que le moteur (2) est arrêté est stockée dans la mémoire (114) et la valeur stockée de la quantité de particules déposées est utilisée en tant que valeur initiale pour l'intégration dans les seconds moyens d'estimation (110).

7. Système de régulation de filtre (1) selon la revendication 1, dans lequel un coefficient dépendant de la divergence est calculé et la valeur calculée (XB) dans les seconds moyens d'estimation (110) est corrigée par le coefficient.

8. Système de régulation de filtre (1) selon la revendication 1, dans lequel lorsqu'une des valeurs dépasse une valeur prescrite, ledit fait est affiché pour l'opérateur.

9. Système de régulation de filtre (1) selon la revendication 1, dans lequel lorsque la différence est supérieure ou égale à une valeur prescrite lors du démarrage du moteur, l'estimation des seconds moyens d'estimation (110) est choisie indépendamment du résultat de détection des moyens de détection (13 à 17).

10. Système de régulation de filtre (1) selon la revendication 1, dans lequel lorsque la différence est supérieure ou égale à une valeur prescrite lors du démarrage du moteur, l'estimation des seconds moyens d'estimation (110) est choisie au cours d'une période prescrite indépendamment du résultat de détection des moyens de détection (13 à 17).

11. Système de régulation de filtre (1) selon la revendication 10, dans lequel la période prescrite est une période que met la valeur estimée de la quantité de particules déposées commencée par les seconds moyens d'estimation (110) depuis le démarrage du moteur pour atteindre une valeur prescrite.

12. Système de régulation de filtre (1) selon la revendication 10, dans lequel lorsque la différence devient inférieure à une valeur prescrite, l'estimation par les premiers moyens d'estimation (100) est choisie à la place de l'estimation par les seconds moyens d'estimation (110).
